# EUROPEAN PATENT APPLICATION

(11) **EP 4 730 533 A1**
(43) Date of publication of application: **22.04.2026**
(21) Application number: 23944838.4
(22) Date of filing: 22.09.2023
(51) Int. Cl.: H01M 50/342, H01M 50/102, H01M 50/147

(54) **BATTERY CELL, BATTERY, AND ELECTRIC DEVICE**

(30) Priority: 13.07.2023 CN 202310855436
(71) Applicant: Contemporary Amperex Technology Co., Limited, Ningde, Fujian 352100 (CN)
(72) Inventor: WU, Kai, Ningde, Fujian 352100 (CN); ZHOU, Wenlin, Ningde, Fujian 352100 (CN); YANG, Kaihuan, Ningde, Fujian 352100 (CN); XU, Liangfan, Ningde, Fujian 352100 (CN); LI, Quankun, Ningde, Fujian 352100 (CN); WANG, Peng, Ningde, Fujian 352100 (CN)
(74) Representative: Kraus & Lederer PartGmbB
(86) International application number: PCT/CN2023/120701
(87) International publication number: WO 2025/010832

(57) **Abstract**

This application provides a battery cell, a battery, and an electric device, relating to the field of batteries. The battery cell includes a housing, a pressure relief mechanism, and a reinforcement member. The housing has a wall portion, where the wall portion has an inner surface facing an interior of the housing, and the inner surface is provided with a groove. The pressure relief mechanism is disposed on the wall portion. The reinforcement member is at least partially accommodated in the groove, and the reinforcement member is disposed around the pressure relief mechanism. Since the reinforcement member is accommodated in the groove, a height by which the reinforcement member protrudes from the wall portion can be reduced. The provision of the groove can reduce a weight of the wall portion. Accommodating at least a portion of the reinforcement member in the groove can enhance rigidity and strength at a position where the groove is provided, improving strength and rigidity of the wall portion without significantly increasing the weight of the wall portion. When the wall portion is subjected to external impact, the reinforcement member can absorb energy of the external impact, reducing a risk of damage to the pressure relief mechanism due to the external impact, enabling the pressure relief mechanism to achieve normal pressure relief function.

## Description

### CROSS-REFERENCE TO RELATED APPLICATIONS

This application claims priority to Chinese Patent Application No. 2023108554368, filed on July 13, 2023 and entitled "BATTERY CELL, BATTERY, AND ELECTRIC DEVICE", which is incorporated herein by reference in its entirety.

### TECHNICAL FIELD

This application relates to the field of batteries, and in particular, to a battery cell, a battery, and an electric device.

### BACKGROUND

Batteries are widely used in the field of new energy, such as electric vehicles and new energy vehicles. New energy vehicles and electric vehicles have become a new trend in the automotive industry. The housing of a battery cell is provided with a pressure relief mechanism configured to release internal pressure when the internal pressure of the battery cell reaches activation pressure. However, during use, the pressure relief mechanism often opens prematurely, resulting in failure to achieve normal pressure relief function.

### SUMMARY

An object of embodiments of this application is to provide a battery cell, a battery, and an electric device, aiming to address the issue in the related art where the pressure relief mechanism often opens prematurely, leading to failure in achieving normal pressure relief function.

According to a first aspect, an embodiment of this application provides a battery cell, where the battery cell includes a housing, a pressure relief mechanism, and a reinforcement member. The housing has a wall portion, where the wall portion has an inner surface facing an interior of the housing, and the inner surface is provided with a groove. The pressure relief mechanism is disposed on the wall portion. The reinforcement member is at least partially accommodated in the groove, where the reinforcement member is disposed around the pressure relief mechanism.

In the above technical solution, since the reinforcement member is accommodated in the groove, a height by which the reinforcement member protrudes from the wall portion can be reduced, or even the reinforcement member may not protrude from the first wall portion, reducing a risk of interference between the reinforcement member and another component and reducing occupation of the internal space of the battery cell by the reinforcement member, helping improve an energy density of the battery cell. Further, the provision of the groove can reduce a weight of the wall portion, and the reinforcement member is at least partially accommodated in the groove. This can enhance rigidity and strength at the position where the groove is provided, improving strength and rigidity of the wall portion without significantly increasing the weight of the wall portion. Additionally, since the reinforcement member is disposed around the pressure relief mechanism, when the wall portion is subjected to external impact, the reinforcement member can absorb energy of the external impact, reducing a magnitude of impact force transferred to the pressure relief mechanism, thereby reducing a risk of damage to the pressure relief mechanism due to the external impact, enabling the pressure relief mechanism to achieve normal pressure relief function.

As an optional technical solution of an embodiment of this application, a material strength of the reinforcement member is greater than a material strength of the wall portion.

In the above technical solution, the material strength of the reinforcement member is greater than the material strength of the wall portion, and therefore the reinforcement member may not protrude from the wall portion, providing effective reinforcement, and reducing a possibility of interference with other structures.

As an optional technical solution of an embodiment of this application, the reinforcement member includes a first reinforcement portion and a second reinforcement portion, the first reinforcement portion is located in the groove, and the second reinforcement portion protrudes from an outer surface of the first reinforcement portion.

In the above technical solution, the first reinforcement portion is accommodated in the groove, enhancing the rigidity and strength at the position where the groove is provided, and the second reinforcement portion protrudes from the outer surface of the first reinforcement portion, further enhancing strength around the pressure relief mechanism and reducing the risk of damage to the pressure relief mechanism due to external impact.

As an optional technical solution of an embodiment of this application, along a thickness direction of the wall portion, the first reinforcement portion has a first surface facing an interior of the housing, and the second reinforcement portion protrudes from the first surface.

In the above technical solution, the second reinforcement portion can be regarded as a reinforcing rib, increasing the overall strength of the reinforcement member, thereby enhancing the strength around the pressure relief mechanism. The second reinforcement portion may also abut against another component, to further reduce a risk of deformation of the reinforcement member and allow the second reinforcement portion to transfer impact force to the another component. This disperses the impact force, reducing the impact force transferred to the pressure relief mechanism, and reducing the risk of damage to the pressure relief mechanism due to external impact, enabling the pressure relief mechanism to achieve normal pressure relief function.

As an optional technical solution of an embodiment of this application, the first surface is flush with the inner surface.

In the above technical solution, the first surface of the first reinforcement portion is flush with the inner surface of the wall portion. In this case, the first reinforcement portion can be fully accommodated in the groove, filling the groove, thereby enhancing the rigidity and strength at the position where the groove is provided, effectively improving the strength around the pressure relief mechanism.

As an optional technical solution of an embodiment of this application, the inner surface is provided with a protruding portion. The protruding portion is disposed around the pressure relief mechanism. The second reinforcement portion is formed with an accommodation space. The protruding portion is at least partially accommodated in the accommodation space.

In the above technical solution, the protruding portion is provided on the inner surface, and the protruding portion is disposed around the pressure relief mechanism. Since the protruding portion also provides reinforcement, the strength around the pressure relief mechanism can be enhanced and the risk of damage to the pressure relief mechanism due to external impact can be reduced. In this way, the pressure relief mechanism can achieve normal pressure relief function. The second reinforcement portion has the accommodation space, allowing the protruding portion to be at least partially accommodated in the accommodation space. The second reinforcement portion enhances the strength near the protruding portion, reducing the risk of damage to the pressure relief mechanism due to external impact. Additionally, the second reinforcement portion can abut against the protruding portion, which further reduces the risk of deformation of the reinforcement member, and allows the second reinforcement portion to transfer impact force to the protruding portion, dispersing the impact force, so that the reinforcement member is less prone to damage.

As an optional technical solution of an embodiment of this application, the second reinforcement portion is an annular structure disposed around the protruding portion.

In the above technical solution, the second reinforcement portion is configured as an annular structure disposed around the protruding portion. In this way, the second reinforcement portion can effectively absorb energy of external impact regardless of the position on the first wall portion that is subjected to the external impact. Additionally, the annular structure of the second reinforcement portion provides higher strength and is less likely to deform due to impact.

As an optional technical solution of an embodiment of this application, the second reinforcement portion has a second surface facing the interior of the housing and furthest from the inner surface, and the protruding portion does not protrude beyond the second surface in a direction from the first surface to the second surface.

In the above technical solution, the protruding portion does not protrude beyond the second surface in the direction from the first surface to the second surface. In other words, a height by which the second reinforcement portion protrudes from the inner surface is not less than a height by which the protruding portion protrudes from the inner surface in the direction from the first surface to the second surface. In this case, tensile strength of the reinforcement member is enhanced during external impact.

As an optional technical solution of an embodiment of this application, along the thickness direction, the protruding portion has an end surface facing the interior of the housing, and the end surface is closer to the first surface than to the second surface.

In the above technical solution, the second reinforcement portion protrudes beyond the end surface of the protruding portion facing the interior of the housing in the direction from the first surface to the second surface. When the wall portion is subjected to external impact causing inward deformation, the pressure relief mechanism is subjected to tensile force, and configuring the second reinforcement portion to protrude beyond the end surface of the protruding portion facing the interior of the housing in the direction from the first surface to the second surface can more effectively limit tensile deformation of the pressure relief mechanism, reducing the risk of damage to the pressure relief mechanism due to external impact, enabling the pressure relief mechanism to achieve normal pressure relief function.

As an optional technical solution of an embodiment of this application, along the thickness direction, a distance between the second surface and the end surface is A, satisfying: 0 ≤ A ≤ 3 mm.

In the above technical solution, the distance between the second surface and the end surface along the thickness direction is limited to 0 mm to 3 mm, in other words, the distance by which the second reinforcement portion protrudes beyond the end surface of the protruding portion facing the interior of the housing in the direction from the first surface to the second surface is not greater than 3 mm. This can effectively limit tensile deformation of the pressure relief mechanism, reduce the risk of damage to the pressure relief mechanism due to external impact, and avoid significant occupation of the internal space of the battery cell, thereby enabling the battery cell to have a relatively high energy density.

As an optional technical solution of an embodiment of this application, the reinforcement member further includes a third reinforcement portion. The third reinforcement portion is connected to an end of the second reinforcement portion away from the first reinforcement portion. The second reinforcement portion is disposed around the third reinforcement portion. Along the thickness direction of the wall portion, the third reinforcement portion is located on a side of the protruding portion facing the interior of the housing.

In the above technical solution, the second reinforcement portion is disposed around the third reinforcement portion, and the reinforcement member is configured in a cap-like shape covering the pressure relief mechanism, so that the reinforcement member has better integrity and higher strength. When the wall portion is subjected to external impact, the reinforcement member can absorb more energy from the external impact without being damaged, reducing a magnitude of the impact force transferred to the pressure relief mechanism, and reducing the risk of damage to the pressure relief mechanism due to the external impact, enabling the pressure relief mechanism to achieve normal pressure relief function.

As an optional technical solution of an embodiment of this application, the third reinforcement portion is provided with an exhaust hole for gas passage.

In the above technical solution, the exhaust hole is provided on the third reinforcement portion, so that gas within the battery cell can pass through the exhaust hole to reach the pressure relief mechanism. A shorter gas path facilitates rapid pressure relief when internal pressure of the battery cell reaches the activation pressure.

As an optional technical solution of an embodiment of this application, the pressure relief mechanism is provided with a weak portion. The weak portion is configured to rupture to release the internal pressure of the battery cell during pressure relief of the battery cell. A projection of the weak portion in the thickness direction does not overlap with the exhaust hole.

In the above technical solution, the projection of the weak portion in the thickness direction does not overlap with the exhaust hole. In this case, an electrolyte within the battery cell is less likely to directly impact the weak portion through the exhaust hole, which helps reduce a risk of premature opening of the weak portion, enabling the pressure relief mechanism to achieve normal pressure relief function.

As an optional technical solution of an embodiment of this application, the pressure relief mechanism is provided with a score groove. The pressure relief mechanism is provided with the weak portion in a region where the score groove is provided.

In the above technical solution, the weak portion is formed by providing the score groove on the pressure relief mechanism. This is simple, convenient, and cost-effective.

As an optional technical solution of an embodiment of this application, the pressure relief mechanism is provided with a score groove and a pressure relief zone, where the score groove is located at an edge of the pressure relief zone. The pressure relief zone is configured to open along the score groove to release the internal pressure of the battery cell during pressure relief of the battery cell. Along the thickness direction, a projection area of the exhaust hole is S₁, and a projection area of the pressure relief zone is S₂, satisfying: 0.5 ≤ S₁/S₂ ≤ 1.2.

In the above technical solution, a ratio of the projection area of the exhaust hole to the projection area of the pressure relief zone is between 0.5 and 1.2. In this case, a size of the exhaust hole is relatively close to a size of the pressure relief zone, so that an area of the exhaust hole is not excessively small, facilitating rapid pressure relief; and the area of the exhaust hole is not excessively large, maintaining high strength of the third reinforcement portion.

As an optional technical solution of an embodiment of this application, the first reinforcement portion is an annular structure disposed around the pressure relief mechanism.

In the above technical solution, the first reinforcement portion is disposed around the pressure relief mechanism. In this way, the first reinforcement portion can effectively absorb energy of external impact regardless of a position on the wall portion that is subjected to the external impact, reducing the risk of damage to the pressure relief mechanism due to external impact, enabling the pressure relief mechanism to achieve normal pressure relief function.

As an optional technical solution of an embodiment of this application, the inner surface is provided with the protruding portion. The protruding portion is disposed around the pressure relief mechanism. The reinforcement member has an accommodation space. The protruding portion is at least partially accommodated in the accommodation space.

In the above technical solution, the protruding portion is provided on the inner surface and the protruding portion is disposed around the pressure relief mechanism. The protruding portion also provides reinforcement, enhancing the strength around the pressure relief mechanism and reducing the risk of damage to the pressure relief mechanism due to external impact, enabling the pressure relief mechanism to achieve normal pressure relief function. The reinforcement member forms the accommodation space, allowing the protruding portion to be at least partially accommodated in the accommodation space, and the reinforcement member enhances the strength near the protruding portion, reducing the risk of damage to the pressure relief mechanism due to external impact. Additionally, the reinforcement member can abut against the protruding portion, which further reduces the risk of deformation of the reinforcement member, and allows the reinforcement member to transfer impact force to the protruding portion, dispersing the impact force, so that the reinforcement member is less prone to damage.

As an optional technical solution of an embodiment of this application, the battery cell includes a limiting member, where the limiting member is disposed on a side of the wall portion facing the interior of the housing. Along the thickness direction of the wall portion, the limiting member at least partially overlaps with a projection of the reinforcement member to limit at least a portion of the reinforcement member within the groove.

In the above technical solution, the limiting member is provided to limit the reinforcement member within the groove. In this way, the risk of the reinforcement member detaching from the groove is reduced, enabling the reinforcement member to provide reinforcement and absorb external impact.

As an optional technical solution of an embodiment of this application, the battery cell further includes an electrode assembly. The electrode assembly is accommodated in the housing. The limiting member is made of an insulating material. The limiting member is configured to insulate and isolate the wall portion from the electrode assembly.

In the above technical solution, the limiting member can constrain the reinforcement member from detaching from the groove and provide insulation. Multiple functions are achieved with a single component. This helps simplify the structure of the battery cell and reduce the cost of the battery cell.

As an optional technical solution of an embodiment of this application, the reinforcement member is bonded or welded to the wall portion.

In the above technical solution, bonding the reinforcement member to the wall portion is simple and convenient, facilitating manufacture. Welding the reinforcement member to the wall portion provides higher strength and better stability for connection between the reinforcement member and the wall portion.

As an optional technical solution of an embodiment of this application, a hardness of the reinforcement member is E₁, and a hardness of the wall portion is E₂, satisfying: 2 ≤ E₁/E₂ ≤ 10.

In the above technical solution, the hardness of the reinforcement member is 2 to 10 times the hardness of the wall portion. In this way, the reinforcement member provides effective reinforcement, and cost control of the reinforcement member is facilitated.

As an optional technical solution of an embodiment of this application, the wall portion is provided with a pressure relief hole. The wall portion and the pressure relief mechanism are separately provided and connected to each other. The pressure relief mechanism covers the pressure relief hole.

In the above technical solution, the pressure relief mechanism is disposed separately from the wall portion and mounted on the wall portion. This facilitates manufacturing.

As an optional technical solution of an embodiment of this application, the pressure relief mechanism is integrally formed with the wall portion.

In the above technical solution, integrating the pressure relief mechanism and the wall portion can enhance rigidity of the pressure relief mechanism. In this way, the pressure relief mechanism is less likely to be damaged when the pressure relief mechanism is subjected to external impact. Additionally, the pressure relief mechanism has strong resistance to electrolyte creep and impact, which helps improve a lifespan of the pressure relief mechanism and reduces a risk of leakage in the pressure relief mechanism.

As an optional technical solution of an embodiment of this application, the housing includes a housing body and an end cap. The housing body has an opening. The end cap closes the opening. The end cap is the wall portion.

In the above technical solution, the end cap is the wall portion, the groove is provided on the end cap, and the reinforcement member is accommodated in the groove. The battery cell can be positioned upright or inverted.

As an optional technical solution of an embodiment of this application, the housing includes a housing body and an end cap. The housing body includes a side wall and the wall portion that are integrally formed. The side wall is disposed around the wall portion. Along the thickness direction of the wall portion, one end of the side wall is connected to the wall portion, and another end forms an enclosing opening. The end cap closes the opening.

In the above technical solution, the bottom wall of the housing body is the wall portion. The groove is provided on the bottom wall of the housing body. The reinforcement member is accommodated in the groove.

According to a second aspect, an embodiment of this application provides a battery, where the battery includes the battery cell described above.

According to a third aspect, an embodiment of this application provides an electric device. The electric device includes the battery cell described above. The battery cell is configured to provide electric energy.

### BRIEF DESCRIPTION OF DRAWINGS

To more clearly illustrate the technical solutions of the embodiments of this application, the drawings for the embodiments are briefly described below. It should be understood that the following drawings only show certain embodiments of this application and therefore should not be considered as limitations to the scope. For those skilled in the art, other related drawings can be obtained based on these drawings without creative effort.
FIG. 1 is a schematic structural diagram of a vehicle provided in some embodiments of this application;
FIG. 2 is an exploded view of a battery provided in some embodiments of this application;
FIG. 3 is a schematic structural diagram of a battery cell provided in some embodiments of this application;
FIG. 4 is an exploded view of a wall portion and a pressure relief mechanism provided in some embodiments of this application;
FIG. 5 is a schematic top view of a wall portion provided in some embodiments of this application;
FIG. 6 is a cross-sectional view at position B-B in FIG. 5;
FIG. 7 is an enlarged view at position C in FIG. 6;
FIG. 8 is a schematic structural diagram of a battery cell provided in other embodiments of this application;
FIG. 9 is an exploded view of a wall portion and a pressure relief mechanism provided in other embodiments of this application;
FIG. 10 is a schematic top view of a wall portion provided in other embodiments of this application;
FIG. 11 is a cross-sectional view at position D-D in FIG. 10;
FIG. 12 is a schematic bottom view of a wall portion provided in other embodiments of this application;
FIG. 13 is a schematic structural diagram of a battery cell provided in further embodiments of this application;
FIG. 14 is a schematic top view of a wall portion provided in further embodiments of this application; and
FIG. 15 is a cross-sectional view at position E-E in FIG. 14.

Description of reference signs:
1000. vehicle; 100. battery; 10. box; 11. first portion; 12. second portion; 200. controller; 20. battery cell; 21. housing; 211. wall portion; 2111. outer surface; 2112. inner surface; 2113. groove; 2115. pressure relief boss; 2116. pressure relief hole; 2117. protruding portion; 21171. end surface; 22. pressure relief mechanism; 221. weak portion; 222. score groove; 23. reinforcement member; 231. first reinforcement portion; 2311. first surface; 232. second reinforcement portion; 2321. second surface; 233. third reinforcement portion; 2331. exhaust hole; 234. accommodation space; 24. protective member; 25. limiting member; and 300. motor.

### DESCRIPTION OF EMBODIMENTS

The embodiments of the technical solutions of this application are described in detail below with reference to the accompanying drawings. The following embodiments are only used to more clearly illustrate the technical solutions of this application and therefore are only examples and not intended to limit the scope of protection of this application.

Unless otherwise defined, all technical and scientific terms used herein have the same meaning as commonly understood by those skilled in the art of this application; the terms used herein are only for the purpose of describing specific embodiments and are not intended to limit this application; the terms "include" and "have" and any variations thereof in the specification, claims, and the above description of the drawings of this application are intended to cover non-exclusive inclusion.

In the description of the embodiments of this application, technical terms such as "first" and "second" are used only to distinguish different objects and should not be understood as indication or implication of relative importance or implicit indication of a quantity, specific order, or priority relationship of the indicated technical features. In the description of the embodiments of this application, "multiple" means two or more, unless otherwise explicitly and specifically defined.

Reference to an "embodiment" herein means that a particular feature, structure, or characteristic described in connection with the embodiment may be included in at least one embodiment of this application. The appearance of this phrase in various places in the specification does not necessarily refer to the same embodiment, nor is it a separate or alternative embodiment mutually exclusive with other embodiments. Those skilled in the art explicitly and implicitly understand that the embodiments described herein may be combined with other embodiments.

In the description of the embodiments of this application, the term "and/or" is merely an association relationship describing associated objects, indicating that three relationships may exist, for example, A and/or B may indicate: A alone, both A and B, or B alone. Additionally, the character "/" herein generally indicates an "or" relationship between the associated objects.

In the description of the embodiments of this application, the term "multiple" refers to two or more (including two), similarly, "multiple groups" refers to two or more groups (including two groups), and "multiple pieces" refers to two or more pieces (including two pieces).

In the description of the embodiments of this application, technical terms such as "center", "longitudinal", "transverse", "length", "width", "thickness", "upper", "lower", "front", "rear", "left", "right", "vertical", "horizontal", "top", "bottom", "inner", "outer", "clockwise", "counterclockwise", "axial", "radial", "circumferential", and the like, indicating orientation or positional relationships are based on the orientation or positional relationships shown in the drawings, and are only for the convenience of describing the embodiments of this application and simplifying the description, rather than indicating or implying that the referred device or element must have a specific orientation, be constructed, or be operated in a specific orientation, and thus should not be understood as limitations to the embodiments of this application.

In the description of the embodiments of this application, unless otherwise explicitly specified and defined, technical terms such as "mounting", "attachment", "connection", "fixation", and the like should be understood broadly, for example, a connection may be a fixed connection, a detachable connection, or an integral formation, may be a mechanical connection or an electrical connection, may be a direct connection or an indirect connection through an intermediate medium, or may be internal communication or interaction between two elements. Those skilled in the art can understand the specific meanings of the above terms in the embodiments of this application based on specific circumstances.

Currently, from the perspective of market development, the application of batteries is becoming increasingly widespread. Batteries are not only used in energy storage power systems such as hydroelectric, thermal, wind, and solar power plants but are also widely applied in electric vehicles such as electric bicycles, electric motorcycles, and electric cars, as well as in military equipment and aerospace fields. With the continuous expansion of battery application fields, the market demand for batteries is also continuously increasing.

The development of battery technology requires simultaneous consideration of multiple design factors, such as energy density, cycle life, discharge capacity, charge-discharge rate, and other performance parameters, as well as the reliability of the battery.

For battery cells, to enhance reliability of a battery cell, the prior art provides a pressure relief mechanism on an end cap of the battery cell. The pressure relief mechanism is configured to open when internal pressure of the battery cell reaches activation pressure to release the internal pressure of the battery cell, reducing the risk of explosion or fire of the battery cell. However, during use, the pressure relief mechanism often opens prematurely, resulting in failure in achieving normal pressure relief function.

During the use of the battery cell, the wall portion provided with the pressure relief mechanism is susceptible to external impact, and the external impact force is easily transferred to the position of the pressure relief mechanism, causing the pressure relief mechanism to open prematurely, resulting in failure to achieve normal pressure relief function.

In view of this, an embodiment of this application provides a battery cell, where the battery cell includes a housing, a pressure relief mechanism, and a reinforcement member. The housing has a wall portion, the wall portion has an inner surface facing an interior of the housing, and the inner surface is provided with a groove. The pressure relief mechanism is disposed on the wall portion. The reinforcement member is at least partially accommodated in the groove, and the reinforcement member is disposed around the pressure relief mechanism.

Since the reinforcement member is accommodated in the groove, a height by which the reinforcement member protrudes from the wall portion can be reduced, or even the reinforcement member may not protrude from the first wall portion, reducing a risk of interference between the reinforcement member and another component and reducing occupation of the internal space of the battery cell by the reinforcement member, helping improve an energy density of the battery cell. Further, the provision of the groove can reduce a weight of the wall portion, and the reinforcement member is at least partially accommodated in the groove. This can enhance rigidity and strength at the position where the groove is provided, improving strength and rigidity of the wall portion without significantly increasing the weight of the wall portion. Additionally, since the reinforcement member is disposed around the pressure relief mechanism, when the wall portion is subjected to external impact, the reinforcement member can absorb energy of the external impact, reducing a magnitude of impact force transferred to the pressure relief mechanism, thereby reducing a risk of damage to the pressure relief mechanism due to the external impact, enabling the pressure relief mechanism to achieve normal pressure relief function.

The battery cell disclosed in the embodiments of this application can be used, but is not limited to, in electric devices such as vehicles, ships, or aircraft. A power supply system for the electric device can be formed by the battery cell, battery, and the like disclosed in this application.

The electric device may be a vehicle, mobile phone, portable device, laptop, ship, spacecraft, electric toy, electric tool, or the like. Spacecraft include airplanes, rockets, space shuttles, spaceships, and the like; electric toys include fixed or mobile electric toys, such as game consoles, electric car toys, electric ship toys, electric airplane toys, and the like; electric tools include metal cutting electric tools, grinding electric tools, assembly electric tools, and railway electric tools, such as electric drills, electric grinders, electric wrenches, electric screwdrivers, electric hammers, impact drills, concrete vibrators, electric planers, and the like.

For convenience of explanation, in the following embodiments, an example in which the electric device is a vehicle 1000 is used.

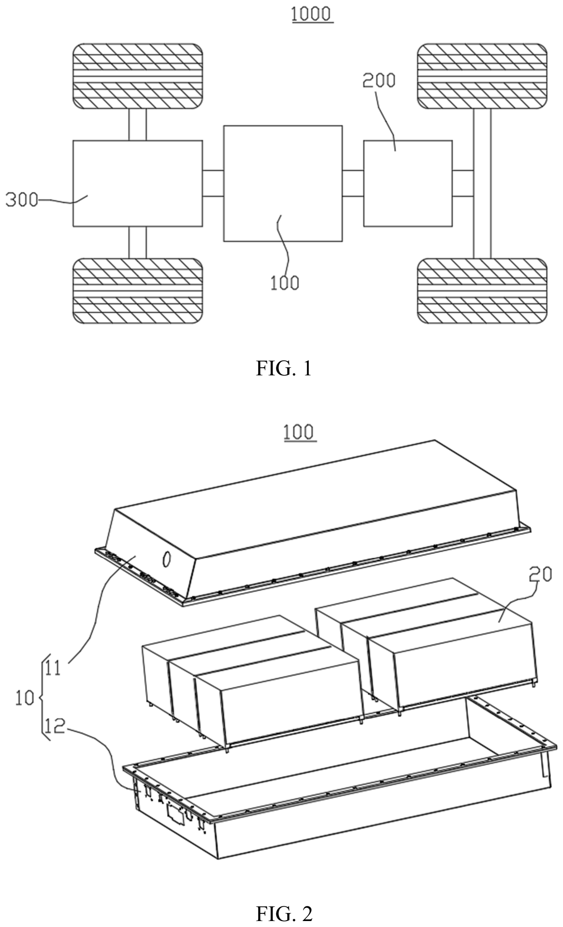

Refer to FIG. 1. FIG. 1 is a schematic structural diagram of a vehicle 1000 provided in some embodiments of this application. The vehicle 1000 may be a fuel vehicle, a gas vehicle, or a new energy vehicle, and the new energy vehicle may be a pure electric vehicle, a hybrid vehicle, an extended-range vehicle, or the like. A battery 100 is provided inside the vehicle 1000, and the battery 100 may be disposed at the bottom, front, or rear of the vehicle 1000. The battery 100 may be used for powering the vehicle 1000, for example, the battery 100 may serve as an operational power source for the vehicle 1000. The vehicle 1000 may further include a controller 200 and a motor 300. The controller 200 is configured to control the battery 100 to supply power to the motor 300, for example, for the operational power requirements of the vehicle 1000 during starting, navigation, and driving.

In some embodiments of this application, the battery 100 may not only serve as an operational power source for the vehicle 1000 but also as a driving power source for the vehicle 1000, replacing or partially replacing fuel or natural gas to provide driving power for the vehicle 1000.

Refer to FIG. 2. FIG. 2 is an exploded view of a battery 100 provided in some embodiments of this application. The battery 100 includes a box 10 and a battery cell 20. The battery cell 20 is accommodated in the box 10. The box 10 is configured to provide an accommodation cavity for the battery cell 20, and the box 10 may adopt various structures. In some embodiments, the box 10 may include a first portion 11 and a second portion 12, where the first portion 11 and the second portion 12 engage with each other, and the first portion 11 and the second portion 12 jointly define an accommodation cavity for accommodating the battery cell 20. The second portion 12 may be a hollow structure with an opening at one end, and the first portion 11 may be a plate-like structure. The first portion 11 covers an opening side of the second portion 12, so that the first portion 11 and the second portion 12 jointly define the accommodation cavity. The first portion 11 and the second portion 12 may alternatively both be hollow structures with an opening on one side, and an opening side of the first portion 11 covers an opening side of the second portion 12. Certainly, the box 10 formed by the first portion 11 and the second portion 12 may have various shapes, such as a cylinder, cuboid, and the like.

In the battery 100, there may be multiple battery cells 20, and the multiple battery cells 20 may be connected in series, parallel, or series-parallel, where a series-parallel connection refers to both series and parallel connections among the multiple battery cells 20. The multiple battery cells 20 may be directly connected in series, parallel, or series-parallel, and an entire structure formed by the multiple battery cells 20 is accommodated in the box 10. Alternatively, the battery 100 may include multiple battery cells 20 first connected in series, parallel, or series-parallel to form a battery module, and multiple battery modules are then connected in series, parallel, or series-parallel to form an entire structure, which is accommodated in the box 10. The battery 100 may further include other structures, for example, the battery 100 may further include a busbar component for achieving electrical connection between the multiple battery cells 20.

Each battery cell 20 may be a secondary battery cell or a primary battery cell, and may also be a lithium-sulfur battery cell, a sodium-ion battery cell, or a magnesium-ion battery cell, but is not limited thereto. The battery cell 20 may be cylindrical, flat, cuboidal, or the like.

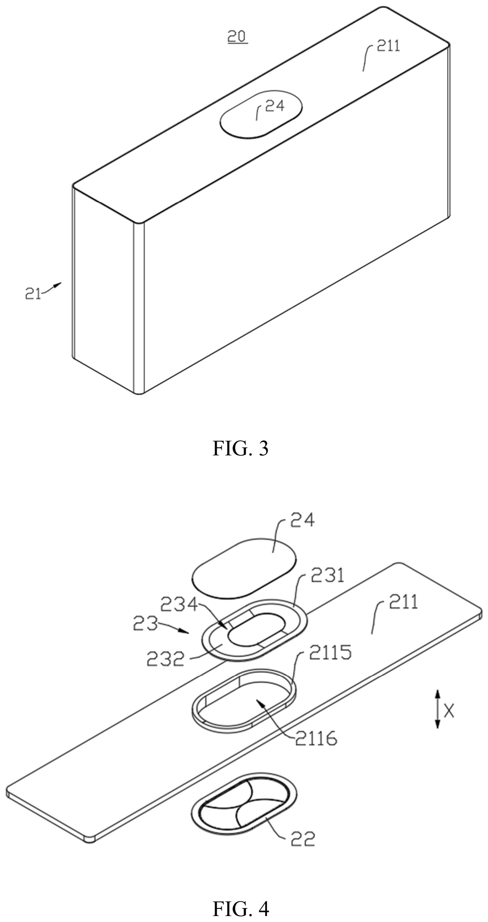

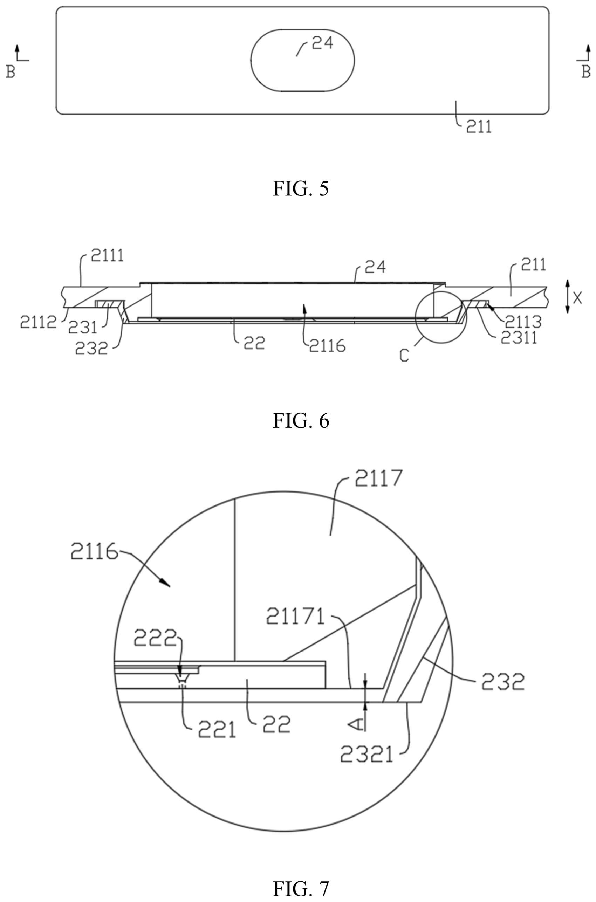

Refer to FIG. 3, FIG. 4, FIG. 5, and FIG. 6. FIG. 3 is a schematic structural diagram of a battery cell 20 provided in some embodiments of this application. FIG. 4 is an exploded view of a wall portion 211 and a pressure relief mechanism 22 provided in some embodiments of this application. FIG. 5 is a schematic top view of a wall portion 211 provided in some embodiments of this application. FIG. 6 is a cross-sectional view at position B-B in FIG. 5. An embodiment of this application provides a battery cell 20, where the battery cell 20 includes a housing 21, a pressure relief mechanism 22, and a reinforcement member 23. The housing 21 has a wall portion 211, the wall portion 211 has an inner surface 2112 facing an interior of the housing 21, and the inner surface 2112 is provided with a groove 2113. The pressure relief mechanism 22 is disposed on the wall portion 211. The reinforcement member 23 is at least partially accommodated in the groove 2113, and the reinforcement member 23 is disposed around the pressure relief mechanism 22.

The battery cell 20 refers to the smallest unit forming the battery 100.

The housing 21 includes an end cap and a housing body, where the housing body has an accommodation cavity with an opening at one end, and the accommodation cavity is configured to accommodate an electrode assembly. The end cap is connected to the housing body and closes the opening.

The end cap refers to a component that covers the opening of the housing body to isolate an internal environment of the battery cell 20 from an external environment. Without limitation, a shape of the end cap may be adapted to the shape of the housing body to match the housing body. Optionally, the end cap may be made of a material with a certain hardness and strength (such as aluminum alloy), so that the end cap is less likely to deform during squeeze or collision, enabling the battery cell 20 to have higher structural strength and improved safety performance. The end cap may be provided with functional components such as an electrode terminal (not shown in the figures). The electrode terminal may be electrically connected to the electrode assembly 22 for outputting or inputting electric energy of the battery cell 20. A material of the end cap may also be varied, such as copper, iron, aluminum, stainless steel, aluminum alloy, plastic, or the like.

The housing body is a component configured to cooperate with the end cap to form the internal environment of the battery cell 20, where the formed internal environment can accommodate the electrode assembly 22, electrolyte, and other components. The housing body and the end cap may be independent components, and an opening may be provided on the housing body, with the end cap at the opening covering the opening to form the internal environment of the battery cell 20. Without limitation, the end cap and the housing body may alternatively be integrated; specifically, the end cap and the housing body may form a common joint surface before other components are placed in the housing body, and when the interior of the housing body needs to be sealed, the end cap covers the housing body. The housing body may be in various shapes and sizes, such as cuboid, cylinder, hexagonal prism, or the like. Specifically, the shape of the housing body may be determined based on a specific shape and size of the electrode assembly 22. A material of the housing body may be varied, such as copper, iron, aluminum, stainless steel, aluminum alloy, plastic, or the like.

The pressure relief mechanism 22 is a component configured to open when the internal pressure or temperature of the battery cell 20 reaches the activation pressure to release the internal pressure of the battery cell 20.

The housing 21 has multiple walls, such as a bottom wall, a side wall, a top wall, and the like. The wall portion 211 refers to a wall provided with the pressure relief mechanism 22. For example, if the pressure relief mechanism 22 is disposed on the bottom wall, the wall portion 211 refers to the bottom wall of the housing body. Alternatively, if the pressure relief mechanism 22 is disposed on the top wall, the wall portion 211 refers to the top wall of the housing body. Alternatively, if the pressure relief mechanism 22 is disposed on a side wall, the wall portion 211 refers to the side wall of the housing body. Alternatively, if the pressure relief mechanism 22 is disposed on the end cap, the wall portion 211 may also refer to the end cap.

Along a thickness direction of the wall portion 211, the wall portion 211 has an outer surface 2111 and an inner surface 2112 oppositely disposed. The outer surface 2111 faces away from the interior of the housing 21. The inner surface 2112 faces the interior of the housing 21. Refer to FIG. 4 and FIG. 6. The thickness direction of the wall portion 211 may be an X direction shown in the figures.

The groove 2113 is a groove provided on the inner surface 2112 of the wall portion 211. In other words, the groove 2113 is recessed from the inner surface 2112 of the wall portion 211 toward the outer surface 2111 of the wall portion 211. The groove 2113 may be formed by various methods, such as stamping or milling. A cross-sectional shape of the groove 2113 may be triangular, rectangular, trapezoidal, or the like.

The reinforcement member 23 may be partially accommodated in the groove 2113, with another portion located outside the groove 2113. In this case, the reinforcement member 23 protrudes from the wall portion 211. The reinforcement member 23 may alternatively be fully accommodated in the groove 2113. In this case, the reinforcement member 23 does not protrude from the wall portion 211.

"The reinforcement member 23 is disposed around the pressure relief mechanism 22" may mean that the reinforcement member 23 partially surrounds the pressure relief mechanism 22, or the reinforcement member 23 completely surrounds the pressure relief mechanism 22. When the reinforcement member 23 completely surrounds the pressure relief mechanism 22, the reinforcement member 23 is annularly disposed around the pressure relief mechanism 22. The reinforcement member 23 is disposed around the pressure relief mechanism 22 to enhance the strength around the pressure relief mechanism 22, so that when the wall portion 211 is subjected to external impact, the reinforcement member 23 can absorb energy of the external impact, reducing the magnitude of the impact force transferred to the pressure relief mechanism 22.

Since the reinforcement member 23 is accommodated in the groove 2113, a height by which the reinforcement member 23 protrudes from the wall portion 211 can be reduced, or even the reinforcement member 23 may not protrude from the first wall portion 211, reducing a risk of interference between the reinforcement member 23 and another component and reducing occupation of internal space of the battery cell 20 by the reinforcement member 23, helping improve an energy density of the battery cell 20. Further, the provision of the groove 2113 can reduce a weight of the wall portion 211. Accommodating at least part of the reinforcement member 23 in the groove 2113 can enhance rigidity and strength at the position where the groove 2113 is provided, improving strength and rigidity of the wall portion 211 without significantly increasing the weight of the wall portion 211. Additionally, since the reinforcement member 23 is disposed around the pressure relief mechanism 22, when the wall portion 211 is subjected to external impact, the reinforcement member 23 can absorb energy of the external impact, reducing a magnitude of the impact force transferred to the pressure relief mechanism 22, thereby reducing a risk of damage to the pressure relief mechanism 22 due to the external impact, enabling the pressure relief mechanism 22 to achieve normal pressure relief function.

In some embodiments, a material strength of the reinforcement member 23 is greater than a material strength of the wall portion 211.

The material strength of the reinforcement member 23 is greater than the material strength of the wall portion 211, for example, if the material of the first wall portion 211 is aluminum, the material of the reinforcement member 23 may be steel, iron, or the like.

The material strength of the reinforcement member 23 is greater than the material strength of the wall portion 211, and therefore the reinforcement member 23 may not protrude from the wall portion 211, providing effective reinforcement, and reducing a possibility of interference with other structures.

Refer to FIG. 3, FIG. 4, FIG. 5, and FIG. 6. In some embodiments, the reinforcement member 23 includes a first reinforcement portion 231 and a second reinforcement portion 232, the first reinforcement portion 231 is located in the groove 2113, and the second reinforcement portion 232 protrudes from an outer surface 2111 of the first reinforcement portion 231.

The first reinforcement portion 231 is a portion of the reinforcement member 23 accommodated in the groove 2113. The second reinforcement portion 232 is connected to the first reinforcement portion 231 and is located outside the groove 2113. The second reinforcement portion 232 can be regarded as a protruding structure protruding from the first reinforcement portion 231, and the second reinforcement portion 232 can further enhance the strength around the pressure relief mechanism 22 and reduce the risk of damage to the first reinforcement portion 23.

The first reinforcement portion 231 is accommodated in the groove 2113, enhancing the rigidity and strength at the position where the groove 2113 is provided, and the second reinforcement portion 232 protrudes from the outer surface 2111 of the first reinforcement portion 231, further enhancing the strength around the pressure relief mechanism 22 and reducing the risk of damage to the pressure relief mechanism 22 due to external impact.

Refer to FIG. 3, FIG. 4, FIG. 5, and FIG. 6. In some embodiments, along the thickness direction of the wall portion 211, the first reinforcement portion 231 has a first surface 2311 facing an interior of the housing 21, and the second reinforcement portion 232 protrudes from the first surface 2311.

The first surface 2311 is a surface of the first reinforcement portion 231 facing the interior of the housing 21 along the thickness direction. The first surface 2311 may be flush with the inner surface 2112 or may be closer to the outer surface 2111 than the inner surface 2112. The first reinforcement portion 231 is connected to the first surface 2311 and protrudes from the first surface 2311.

The second reinforcement portion 232 can be regarded as a reinforcing rib, increasing the overall strength of the reinforcement member 23, thereby enhancing the strength around the pressure relief mechanism 22. The second reinforcement portion 232 may also abut against another component, to further reduce the risk of deformation of the reinforcement member 23 and allow the second reinforcement portion 232 to transfer impact force to the another component. This disperses the impact force, reducing the impact force transferred to the pressure relief mechanism 22, and reducing the risk of damage to the pressure relief mechanism 22 due to external impact, enabling the pressure relief mechanism 22 to achieve normal pressure relief function.

Refer to FIG. 3, FIG. 4, FIG. 5, and FIG. 6. In some embodiments, the first surface 2311 is flush with the inner surface 2112.

"The first surface 2311 is flush with the inner surface 2112" may also be understood as: along the thickness direction, a distance between the first surface 2311 and the outer surface 2111 is equal to a distance between the inner surface 2112 and the outer surface 2111.

The first surface 2311 of the first reinforcement portion 231 is flush with the inner surface 2112 of the wall portion 211. In this case, the first reinforcement portion 231 can be fully accommodated in the groove 2113, filling the groove 2113, thereby enhancing the rigidity and strength at the position where the groove 2113 is provided, effectively improving the strength around the pressure relief mechanism 22.

Refer to FIG. 3, FIG. 4, FIG. 5, and FIG. 6. In some embodiments, the inner surface 2112 is provided with a protruding portion 2117. The protruding portion 2117 is disposed around the pressure relief mechanism 22. The second reinforcement portion 232 is formed with an accommodation space 234. The protruding portion 2117 is at least partially accommodated in the accommodation space 234.

The protruding portion 2117 is a protruding structure provided on the inner surface 2112. Optionally, the outer surface 2111 of the wall portion 211 is provided with a pressure relief boss 2115, where the pressure relief boss 2115 is disposed around a pressure relief hole 2116. The protruding portion 2117 is provided with a mounting groove, and the pressure relief hole 2116 penetrates a bottom wall of the mounting groove and the outer surface 2111 of the wall portion 211. The pressure relief mechanism 22 is disposed in the mounting groove and covers the pressure relief hole 2116. The pressure relief boss 2115 is provided with a protective member 24, where the protective member 24 shields the pressure relief hole 2116 to reduce the risk of external impurities entering the pressure relief hole 2116.

The second reinforcement portion 232 is formed with the accommodation space 234, and the protruding portion 2117 is at least partially accommodated in the accommodation space 234. The second reinforcement portion 232 may be annular, and in this case, the protruding portion 2117 is located between the pressure relief mechanism 22 and the second reinforcement portion 232.

The protruding portion 2117 is provided on the inner surface 2112, and the protruding portion 2117 is disposed around the pressure relief mechanism 22. Since the protruding portion 2117 also provides reinforcement, the strength around the pressure relief mechanism 22 can be enhanced and the risk of damage to the pressure relief mechanism 22 due to external impact can be reduced. In this way, the pressure relief mechanism 22 can achieve normal pressure relief function. The second reinforcement portion 232 has the accommodation space 234, allowing the protruding portion 2117 to be at least partially accommodated in the accommodation space 234. The second reinforcement portion 232 enhances the strength near the protruding portion 2117, reducing the risk of damage to the pressure relief mechanism 22 due to external impact. Additionally, the second reinforcement portion 232 can abut against the protruding portion 2117, which further reduces the risk of deformation of the reinforcement member 23, and allows the second reinforcement portion 232 to transfer impact force to the protruding portion 2117, dispersing the impact force, so that the reinforcement member 23 is less prone to damage.

Refer to FIG. 3, FIG. 4, FIG. 5, and FIG. 6. In some embodiments, the second reinforcement portion 232 is an annular structure disposed around the protruding portion 2117.

The second reinforcement portion 232 is a closed structure extending along a closing trajectory (annular structure). The second reinforcement portion 232 completely surrounds the pressure relief mechanism 22.

The second reinforcement portion 232 may be circular, elliptical, or racetrack-shaped.

Refer to FIG. 3, FIG. 4, FIG. 5, and FIG. 6. In some embodiments, the second reinforcement portion 232 is in the shape of a conical tube, and a hollow portion of the conical tube-shaped second reinforcement portion 232 has the accommodation space 234.

The second reinforcement portion 232 is configured as an annular structure disposed around the protruding portion 2117. In this way, the second reinforcement portion 232 can effectively absorb energy of external impact regardless of the position on the wall portion 211 that is subjected to the external impact. Additionally, the annular structure of the second reinforcement portion 232 provides higher strength and is less likely to deform due to impact.

Refer to FIG. 5, FIG. 6, and FIG. 7. FIG. 7 is an enlarged view at position C in FIG. 6. In some embodiments, the second reinforcement portion 232 has a second surface 2321 facing the interior of the housing 21 and furthest from the inner surface 2112. The protruding portion 2117 does not protrude beyond the second surface 2321 in a direction from the first surface 2311 to the second surface 2321.

The second surface 2321 is a surface of the second reinforcement portion 232 facing the interior of the housing 21 along the thickness direction and furthest from the inner surface 2112. The second surface 2321 may also be understood as the end surface 21171 of the second reinforcement portion 232 facing the interior of the housing 21.

The protruding portion 2117 does not protrude beyond the second surface 2321 in the direction from the first surface 2311 to the second surface 2321. In other words, along the direction from the first surface 2311 to the second surface 2321, the height by which the second reinforcement portion 232 protrudes from the inner surface 2112 is not less than the height by which the protruding portion 2117 protrudes from the inner surface 2112.

The protruding portion 2117 does not protrude beyond the second surface 2321 in the direction from the first surface 2311 to the second surface 2321. In this case, tensile strength of the reinforcement member 23 is enhanced during external impact.

Refer to FIG. 5, FIG. 6, and FIG. 7. In some embodiments, along the thickness direction, the protruding portion 2117 has an end surface 21171 facing the interior of the housing 21, and the end surface 21171 is closer to the first surface 2311 than to the second surface 2321.

The end surface 21171 is a surface of the protruding portion 2117 facing the interior of the housing 21 and furthest from the inner surface 2112.

"The end surface 21171 is closer to the first surface 2311 than to the second surface 2321" means that the second reinforcement portion 232 protrudes beyond the end surface 21171 of the protruding portion 2117 facing the interior of the housing 21 in the direction from the first surface 2311 to the second surface 2321.

The second reinforcement portion 232 protrudes beyond the end surface 21171 of the protruding portion 2117 facing the interior of the housing 21 in the direction from the first surface 2311 to the second surface 2321. When the wall portion 211 is subjected to external impact causing inward deformation, the pressure relief mechanism 22 is subjected to tensile force, and configuring the second reinforcement portion 232 to protrude beyond the end surface 21171 of the protruding portion 2117 facing the interior of the housing 21 in the direction from the first surface 2311 to the second surface 2321 can more effectively limit tensile deformation of the pressure relief mechanism 22, reducing the risk of damage to the pressure relief mechanism 22 due to external impact, enabling the pressure relief mechanism 22 to achieve normal pressure relief function.

Refer to FIG. 5, FIG. 6, and FIG. 7. In some embodiments, along the thickness direction, a distance between the second surface 2321 and the end surface 21171 is A, satisfying: 0 ≤ A ≤ 3 mm.

A represents the distance between the second surface 2321 and the end surface 21171 along the thickness direction; in other words, A represents the distance by which the second reinforcement portion 232 protrudes beyond the end surface 21171 in the direction from the first surface 2311 to the second surface 2321.

Along the thickness direction, the distance between the second surface 2321 and the end surface 21171 may be: A = 0 mm, 0.2 mm, 0.5 mm, 0.8 mm, 1 mm, 1.2 mm, 1.5 mm, 1.8 mm, 2 mm, 2.2 mm, 2.5 mm, 2.8 mm, 3 mm, or the like.

The distance between the second surface 2321 and the end surface 21171 along the thickness direction is limited to 0 mm to 3 mm, in other words, the distance by which the second reinforcement portion 232 protrudes beyond the end surface 21171 of the protruding portion 2117 facing the interior of the housing 21 in the direction from the first surface 2311 to the second surface 2321 is not greater than 3 mm. This can effectively limit tensile deformation of the pressure relief mechanism 22, reduce the risk of damage to the pressure relief mechanism 22 due to external impact, and avoid significant occupation of the internal space of the battery cell 20, thereby enabling the battery cell 20 to have a relatively high energy density.

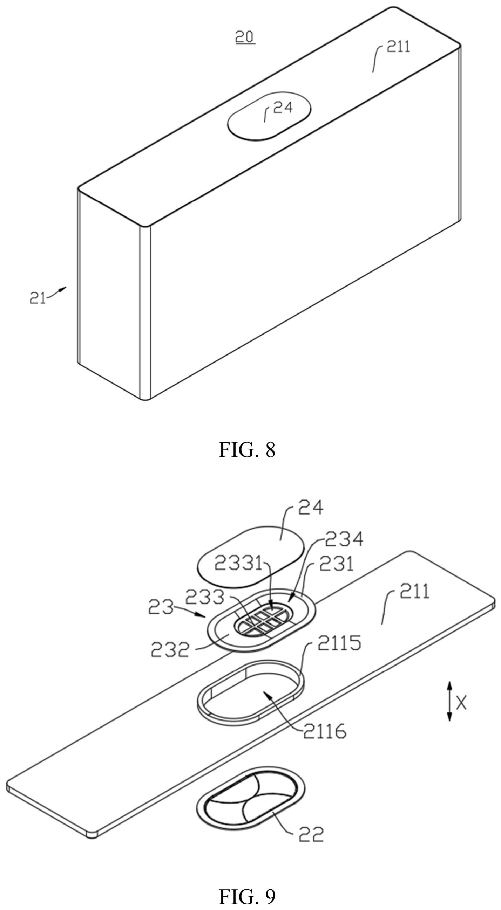

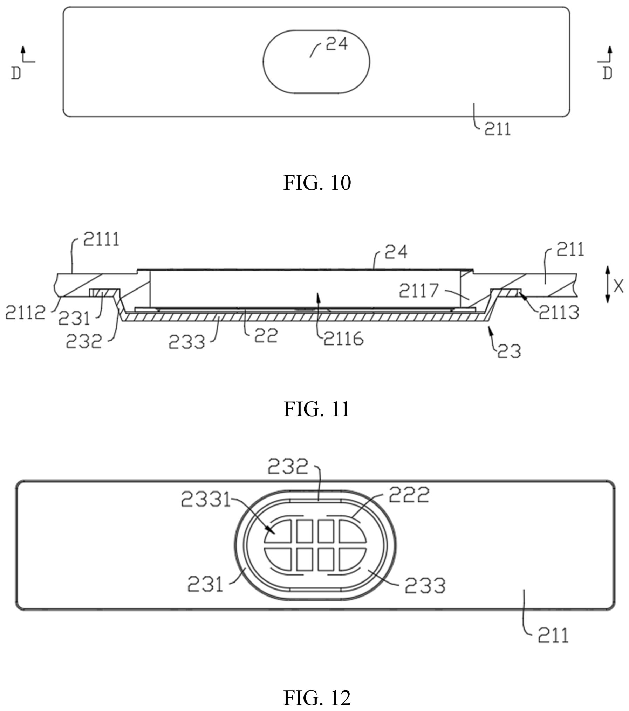

Refer to FIG. 8, FIG. 9, FIG. 10, FIG. 11, and FIG. 12. FIG. 8 is a schematic structural diagram of a battery cell 20 provided in other embodiments of this application. FIG. 9 is an exploded view of a wall portion 211 and a pressure relief mechanism 22 provided in other embodiments of this application. FIG. 10 is a schematic top view of a wall portion 211 provided in other embodiments of this application. FIG. 11 is a cross-sectional view at position D-D in FIG. 10. FIG. 12 is a schematic bottom view of a wall portion 211 provided in other embodiments of this application. In some embodiments, the reinforcement member 23 further includes a third reinforcement portion 233, where the third reinforcement portion 233 is connected to an end of the second reinforcement portion 232 away from the first reinforcement portion 231. The second reinforcement portion 232 is disposed around the third reinforcement portion 233. Along the thickness direction of the wall portion 211, the third reinforcement portion 233 is located on a side of the protruding portion 2117 facing the interior of the housing 21.

The third reinforcement portion 233 is a portion of the reinforcement member 23 located on the side of the protruding portion 2117 facing the interior of the housing 21 along the thickness direction of the wall portion 211.

The second reinforcement portion 232 is disposed around the third reinforcement portion 233; optionally, the second reinforcement portion 232 is conical tube-shaped with openings at both ends, and the third reinforcement portion 233 is connected to one end of the second reinforcement portion 232, closing an opening of one end.

The first reinforcement portion 231, the second reinforcement portion 232, and the third reinforcement portion 233 are connected to form a cap-like structure, where the cap-like structure covers the protruding portion 2117.

The second reinforcement portion 232 is disposed around the third reinforcement portion 233, and the reinforcement member 23 is configured in a cap-like shape covering the pressure relief mechanism 22, so that the reinforcement member 23 has better integrity and higher strength. When the wall portion 211 is subjected to external impact, the reinforcement member 23 can absorb more energy from the external impact without being damaged, reducing a magnitude of the impact force transferred to the pressure relief mechanism 22, and reducing the risk of damage to the pressure relief mechanism 22 due to the external impact, enabling the pressure relief mechanism 22 to achieve normal pressure relief function.

Refer to FIG. 8, FIG. 9, FIG. 10, FIG. 11, and FIG. 12. In some embodiments, the third reinforcement portion 233 is provided with an exhaust hole 2331 for gas passage.

Along the thickness direction, the exhaust hole 2331 is a through hole penetrating the third reinforcement portion 233. The exhaust hole 2331 allows gas to flow from the side of the third reinforcement portion 233 facing away from the inner surface 2112 to the side of the third reinforcement portion 233 facing the inner surface 2112, enabling gas to be discharged via the pressure relief mechanism 22.

The exhaust hole 2331 is provided on the third reinforcement portion 233, so that gas within the battery cell 20 can pass through the exhaust hole 2331 to reach the pressure relief mechanism 22. A shorter gas path facilitates rapid pressure relief when the internal pressure of the battery cell 20 reaches the activation pressure.

In other embodiments, the exhaust hole 2331 may also be provided on the second reinforcement portion 232, allowing gas to reach the pressure relief mechanism 22.

Refer to FIG. 8, FIG. 9, FIG. 10, FIG. 11, and FIG. 12. In some embodiments, the pressure relief mechanism 22 is provided with a weak portion 221, where the weak portion 221 is configured to rupture to release the internal pressure of the battery cell 20 during pressure relief of the battery cell 20. A projection of the weak portion 221 in the thickness direction does not overlap with the exhaust hole 2331.

The weak portion 221 is a weak position on the pressure relief mechanism 22. The weak portion 221 is a structure configured to open when the internal pressure or temperature of the battery cell 20 reaches the activation pressure to release the internal pressure of the battery cell 20, reducing the risk of explosion or fire of the battery cell 20.

In some embodiments, a thickness of the pressure relief mechanism 22 at the weak portion 221 is less than a thickness of the pressure relief mechanism 22 at other positions, so that the pressure relief mechanism 22 can open at the weak portion 221 under the action of gas pressure.

In other embodiments, a melting point of a material of the pressure relief mechanism 22 at the weak portion 221 is lower than a melting point of the material at other positions, so that the pressure relief mechanism 22 can melt the weak portion 221 under the action of high-temperature gas to release pressure.

"A projection of the weak portion 221 in the thickness direction does not overlap with the exhaust hole 2331" means that the weak portion 221 and the exhaust hole 2331 are offset from each other.

The projection of the weak portion 221 in the thickness direction does not overlap with the exhaust hole 2331. In this case, the electrolyte within the battery cell 20 is less likely to directly impact the weak portion 221 through the exhaust hole 2331, which helps reduce a risk of premature opening of the weak portion 221, enabling the pressure relief mechanism 22 to achieve normal pressure relief function.

In some embodiments, the pressure relief mechanism 22 is provided with a score groove, and the weak portion 221 is provided in a region where the score groove is provided in the pressure relief mechanism 22.

The score groove 222 may be formed by various methods, such as stamping or milling. The score groove 222 may be provided on the surface of the pressure relief mechanism 22 facing the interior of the housing 21 or on the surface of the pressure relief mechanism 22 facing away from the interior of the housing 21.

The score groove 222 may be the groove 2113 recessed along the thickness direction from the surface of the pressure relief mechanism 22 facing away from the interior of the housing 21, and the weak portion 221 is a portion between the surface of the pressure relief mechanism 22 facing the interior of the housing 21 and the bottom surface of the score groove 222. The score groove 222 may alternatively be the groove 2113 recessed along the thickness direction from the surface of the pressure relief mechanism 22 facing the interior of the housing 21, and the weak portion 221 is a portion between the surface of the pressure relief mechanism 22 facing away from the interior of the housing 21 and the bottom surface of the score groove 222.

For illustration, the score groove 222 is the groove 2113 recessed along the thickness direction from the surface of the pressure relief mechanism 22 facing away from the interior of the housing 21, and the score groove 222 may be a linear groove extending along a straight trajectory. The score groove 222 may alternatively be an annular groove extending along a closing trajectory.

The weak portion 221 is formed by providing the score groove on the pressure relief mechanism 22. This is simple, convenient, and cost-effective.

Refer to FIG. 8, FIG. 9, FIG. 10, FIG. 11, and FIG. 12. In some embodiments, the pressure relief mechanism 22 is provided with a score groove and a pressure relief zone, where the score groove is located at an edge of the pressure relief zone. The pressure relief zone is configured to open along the score groove to release the internal pressure of the battery cell 20 during pressure relief of the battery cell 20. Along the thickness direction, a projection area of the exhaust hole 2331 is S₁, and a projection area of the pressure relief zone is S₂, satisfying: 0.5 ≤ S₁/S₂ ≤ 1.2.

A size of the pressure relief zone is the same as a size of the opening that the pressure relief mechanism 22 can open when the battery cell 20 releases pressure. In other words, an area of the pressure relief zone is an area of the region defined by the score groove.

Refer to FIG. 12. The projection area of the pressure relief zone is an area enclosed by the score groove shown in dashed lines in the figure.

When only one exhaust hole 2331 is provided on the third reinforcement portion 233, S₁ represents a projection area of that single exhaust hole 2331. When multiple exhaust holes 2331 are provided on the third reinforcement portion 233, S₁ represents a total projection area of all the exhaust holes 2331.

Along the thickness direction, a ratio of the projection area of the exhaust hole 2331 to the projection area of the pressure relief zone may be: S₁/S₂ = 0.5, 0.55, 0.6, 0.65, 0.7, 0.75, 0.8, 0.85, 0.9, 0.95, 1, 1.05, 1.1, 1.15, 1.2, or the like.

The ratio of the projection area of the exhaust hole 2331 to the projection area of the pressure relief zone is between 0.5 and 1.2. In this case, a size of the exhaust hole 2331 is relatively close to a size of the pressure relief zone, so that the area of the exhaust hole 2331 is not excessively small, facilitating rapid pressure relief; and the area of the exhaust hole 2331 is not excessively large, maintaining high strength of the third reinforcement portion 233.

Refer to FIG. 12. In some embodiments, the first reinforcement portion 231 is an annular structure disposed around the pressure relief mechanism 22.

The first reinforcement portion 231 is a closed structure extending along a closing trajectory (annular structure). The first reinforcement portion 231 completely surrounds the pressure relief mechanism 22.

The first reinforcement portion 231 may be circular, elliptical, or racetrack-shaped.

The first reinforcement portion 231 is disposed around the pressure relief mechanism 22. In this way, the first reinforcement portion 231 can effectively absorb energy of external impact regardless of a position on the wall portion 211 that is subjected to the external impact, reducing the risk of damage to the pressure relief mechanism 22 due to external impact, enabling the pressure relief mechanism 22 to achieve normal pressure relief function.

Refer to FIG. 9, FIG. 10, FIG. 11, and FIG. 12. In some embodiments, the inner surface 2112 is provided with the protruding portion 2117, where the protruding portion 2117 is disposed around the pressure relief mechanism 22. The reinforcement member 23 is formed with the accommodation space 234, and the protruding portion 2117 is at least partially accommodated in the accommodation space 234.

The protruding portion 2117 is a protruding structure provided on the inner surface 2112. The protruding portion 2117 is annularly disposed around the pressure relief mechanism 22. The reinforcement member 23 has the accommodation space 234, and the protruding portion 2117 is at least partially accommodated in the accommodation space 234. Optionally, the reinforcement member 23 is cap-shaped, covering the protruding portion 2117.

The protruding portion 2117 is provided on the inner surface 2112 and the protruding portion 2117 is disposed around the pressure relief mechanism 22. The protruding portion 2117 also provides reinforcement, enhancing the strength around the pressure relief mechanism 22 and reducing the risk of damage to the pressure relief mechanism 22 due to external impact, enabling the pressure relief mechanism 22 to achieve normal pressure relief function. The reinforcement member 23 forms the accommodation space 234, allowing the protruding portion 2117 to be at least partially accommodated in the accommodation space 234, and the reinforcement member 23 enhances the strength near the protruding portion 2117, reducing the risk of damage to the pressure relief mechanism 22 due to external impact. Additionally, the reinforcement member 23 can abut against the protruding portion 2117, which further reduces the risk of deformation of the reinforcement member 23, and allows the reinforcement member 23 to transfer impact force to the protruding portion 2117, dispersing the impact force, so that the reinforcement member 23 is less prone to damage.

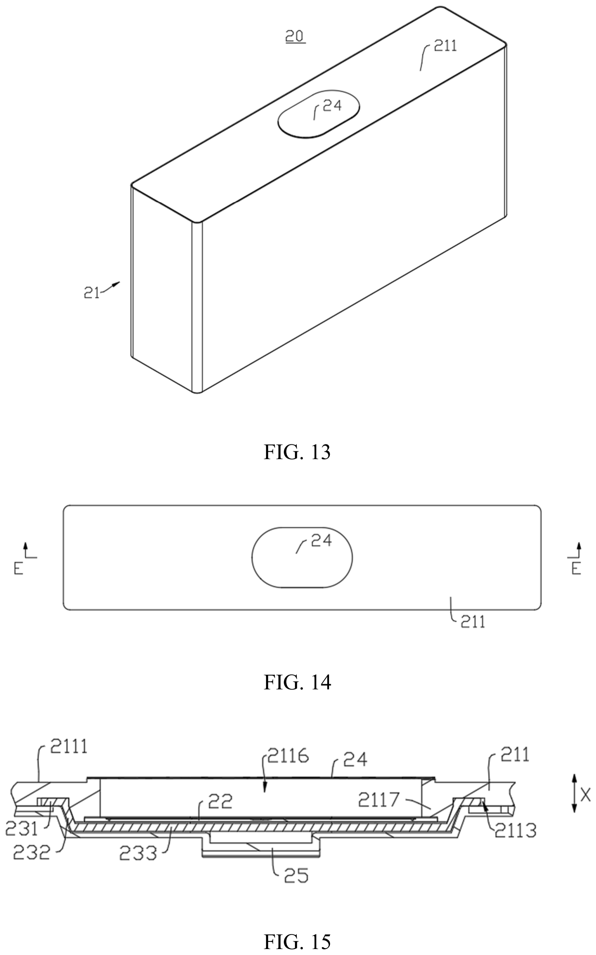

Refer to FIG. 13, FIG. 14, and FIG. 15. FIG. 13 is a schematic structural diagram of a battery cell 20 provided in further embodiments of this application. FIG. 14 is a schematic top view of a wall portion 211 provided in further embodiments of this application. FIG. 15 is a cross-sectional view at position E-E in FIG. 14. In some embodiments, the battery cell 20 includes a limiting member 25, where the limiting member 25 is disposed on a side of the wall portion 211 facing the interior of the housing 21. Along the thickness direction of the wall portion 211, the limiting member 25 at least partially overlaps with a projection of the reinforcement member 23 to limit at least a portion of the reinforcement member 23 within the groove 2113.

The limiting member 25 is a component configured to limit at least a portion of the reinforcement member 23 within the groove 2113. The limiting member 25 is located on the side of the wall portion 211 facing the interior of the housing 21. Along the thickness direction of the wall portion 211, the limiting member 25 and the reinforcement member 23 may be stacked.

Optionally, the limiting member 25 is connected to the inner surface 2112, and a portion of the limiting member 25 overlaps with the reinforcement member 23 to prevent the reinforcement member 23 from detaching from the groove 2113.

The limiting member 25 is provided to limit the reinforcement member 23 within the groove 2113. In this way, the risk of the reinforcement member 23 detaching from the groove 2113 is reduced, enabling the reinforcement member 23 to provide reinforcement and absorb external impact.

In some embodiments, the battery cell 20 further includes an electrode assembly, where the electrode assembly is accommodated in the housing 21. The limiting member 25 is made of an insulating material, and the limiting member 25 is configured to insulate and isolate the wall portion 211 from the electrode assembly.

The electrode assembly is a component in the battery cell 20 where electrochemical reactions occur. The housing 21 may contain one or more electrode assemblies. The electrode assembly is mainly formed by winding or stacking a positive electrode plate and a negative electrode plate, with a separator typically provided between the positive electrode plate and the negative electrode plate. Portions of the positive electrode plate and the negative electrode plate with active material constitute a main body of the electrode assembly, and portions of the positive electrode plate and the negative electrode plate without active material each constitute a tab. A positive tab and the negative tab may be both located at one end of the main body or respectively at both ends of the main body. During the charge and discharge process of the battery 100, the positive active material and the negative active material react with the electrolyte.

The limiting member 25 is made of an insulating material, such as plastic or rubber. The limiting member 25 has an insulating property, enabling insulation and isolation between the wall portion 211 and the electrode assembly, reducing the risk of a short circuit between them.

Optionally, the limiting member 25 is a lower plastic. The lower plastic is disposed on the side of the wall portion 211 facing the interior of the housing 21. Along the thickness direction of the wall portion 211, the lower plastic at least partially overlaps with the projection of the reinforcement member 23 to limit at least a portion of the reinforcement member 23 within the groove 2113.

The limiting member 25 can constrain the reinforcement member 23 from detaching from the groove 2113 and provide insulation. Multiple functions are achieved with a single component. This helps simplify the structure of the battery cell 20 and reduce the cost of the battery cell 20.

In other embodiments, the reinforcement member 23 is bonded or welded to the wall portion 211.

Bonding the reinforcement member 23 to the wall portion 211 is simple and convenient, facilitating manufacture. Welding the reinforcement member 23 to the wall portion 211 provides higher strength and better stability for connection between the reinforcement member 23 and the wall portion 211.

In some embodiments, a hardness of the reinforcement member 23 is E₁, and a hardness of the wall portion 211 is E₂, satisfying: 2 ≤ E₁/E₂ ≤ 10.

The hardness of the reinforcement member 23 is greater than the hardness of the wall portion 211. Generally, a material with a high hardness also has high strength. A ratio of the hardness of the reinforcement member 23 to the hardness of the wall portion 211 may be: E₁/E₂ = 2, 2.5, 3, 3.5, 4, 4.5, 5, 5.5, 6, 6.5, 7, 7.5, 8, 8.5, 9, 9.5, 10, or the like.

The hardness of the reinforcement member 23 is 2 to 10 times the hardness of the wall portion 211. In this way, the reinforcement member 23 provides effective reinforcement, and cost control of the reinforcement member 23 is facilitated.

Refer to FIG. 13, FIG. 14, and FIG. 15. In some embodiments, the wall portion 211 is provided with a pressure relief hole 2116. The wall portion 211 and the pressure relief mechanism 22 are separately provided and connected to each other. The pressure relief mechanism 22 covers the pressure relief hole 2116.

The pressure relief hole 2116 is a through hole penetrating the inner surface and the outer surface 2111 of the wall portion 211, allowing gas inside the battery cell 20 to be discharged through the pressure relief hole 2116.

"The wall portion 211 and the pressure relief mechanism 22 are separately provided and connected" means that during manufacturing, the pressure relief mechanism 22 and the wall portion 211 are provided separately and ultimately connected with each other. For example, the pressure relief mechanism 22 may be welded to the wall portion 211.

The pressure relief mechanism 22 covers the pressure relief hole 2116, preventing external impurities from easily entering the battery cell 20 through the pressure relief hole 2116, and the electrolyte inside the battery cell 20 from easily flowing out of the battery cell 20 through the pressure relief hole 2116. When the battery cell 20 releases pressure, the pressure relief mechanism 22 opens, allowing gas inside the battery cell 20 to be discharged from the battery cell 20 through the pressure relief hole 2116.

The pressure relief mechanism 22 is disposed separately from the wall portion 211 and mounted on the wall portion 211. This facilitates manufacturing.

In other embodiments, the pressure relief mechanism 22 is integrally formed with the wall portion 211.

"The pressure relief mechanism 22 is integrally formed with the wall portion 211" means that the wall portion 211 and the pressure relief mechanism 22 are provided as an integral structure. For example, the pressure relief mechanism 22 may be formed on the wall portion 211 by stamping or cold heading.

Integrating the pressure relief mechanism 22 and the wall portion 211 can enhance the rigidity of the pressure relief mechanism 22. In this way, the pressure relief mechanism 22 is less likely to be damaged when the pressure relief mechanism 22 is subjected to external impact. Additionally, the pressure relief mechanism 22 has strong resistance to electrolyte creep and impact, which helps improve a lifespan of the pressure relief mechanism 22 and reduces a risk of leakage in the pressure relief mechanism 22.

Refer to FIG. 13, FIG. 14, and FIG. 15. In some embodiments, the housing 21 includes a housing body and an end cap. The housing body has an opening, and the end cap closes the opening. The end cap is the wall portion 211.

The end cap is the wall portion 211, the groove 2113 is provided on the end cap, and the reinforcement member 23 is accommodated in the groove 2113. The battery cell 20 can be positioned upright or inverted.

In other embodiments, the housing 21 includes a housing body and an end cap. The housing body includes a side wall and the wall portion 211 that are integrally formed. The side wall is disposed around the wall portion 211. Along the thickness direction of the wall portion 211, one end of the side wall is connected to the wall portion 211, and another end forms an enclosing opening. The end cap closes the opening.

During provision of the housing body, the side wall and the bottom wall form an integral structure. The side wall and the bottom wall may be integrally formed by stamping or casting. One end of the side wall is connected to the bottom wall, and another end of the side wall is connected to the end cap. Along the thickness direction of the end cap, the bottom wall and the end cap are oppositely disposed. The bottom wall is the wall portion 211.

The bottom wall of the housing body is the wall portion 211. The groove 2113 is provided on the bottom wall of the housing body. The reinforcement member 23 is accommodated in the groove 2113.

In further embodiments, one side wall of the housing body is the wall portion 211.

An embodiment of this application provides a battery 100, where the battery 100 includes the battery cell 20 described above.

An embodiment of this application further provides an electric device, where the electric device includes the battery cell 20 described above, and the battery cell 20 is configured to provide electric energy.

According to some embodiments of this application, refer to FIG. 3 to FIG. 15.

An embodiment of this application provides a battery cell 20, where the battery cell 20 includes a housing 21, a pressure relief mechanism 22, and a reinforcement member 23. The housing 21 has a wall portion 211, the wall portion 211 has an inner surface 2112 facing an interior of the housing 21, and the inner surface 2112 is provided with a groove 2113. The pressure relief mechanism 22 is disposed on the wall portion 211. The reinforcement member 23 is at least partially accommodated in the groove 2113, and the reinforcement member 23 is disposed around the pressure relief mechanism 22. A material strength of the reinforcement member 23 is greater than a material strength of the wall portion 211. Since the reinforcement member 23 is accommodated in the groove 2113, a height by which the reinforcement member 23 protrudes from the wall portion 211 can be reduced, or even the reinforcement member 23 may not protrude from the first wall portion 211, reducing a risk of interference between the reinforcement member 23 and another component and reducing occupation of internal space of the battery cell 20 by the reinforcement member 23, helping improve an energy density of the battery cell 20. Further, the provision of the groove 2113 can reduce a weight of the wall portion 211. Accommodating at least part of the reinforcement member 23 in the groove 2113 can enhance rigidity and strength at the position where the groove 2113 is provided, improving strength and rigidity of the wall portion 211 without significantly increasing the weight of the wall portion 211. Additionally, since the reinforcement member 23 is disposed around the pressure relief mechanism 22, when the wall portion 211 is subjected to external impact, the reinforcement member 23 can absorb energy of the external impact, reducing a magnitude of the impact force transferred to the pressure relief mechanism 22, thereby reducing a risk of damage to the pressure relief mechanism 22 due to the external impact, enabling the pressure relief mechanism 22 to achieve normal pressure relief function.

The reinforcement member 23 includes a first reinforcement portion 231 and a second reinforcement portion 232. The first reinforcement portion 231 is located in the groove 2113, and the second reinforcement portion 232 protrudes from an outer surface 2111 of the first reinforcement portion 231. An inner surface 2112 is provided with a protruding portion 2117, the protruding portion 2117 is disposed around the pressure relief mechanism 22, and the second reinforcement portion 232 abuts against the protruding portion 2117. The first reinforcement portion 231 is accommodated in the groove 2113, enhancing rigidity and strength at the position where the groove 2113 is provided, and the second reinforcement portion 232 protrudes from the outer surface 2111 of the first reinforcement portion 231, further enhancing the strength around the pressure relief mechanism 22 and reducing the risk of damage to the pressure relief mechanism 22 due to external impact. The protruding portion 2117 is provided on the inner surface 2112 and the protruding portion 2117 is disposed around the pressure relief mechanism 22. The protruding portion 2117 also provides reinforcement, enhancing the strength around the pressure relief mechanism 22 and reducing the risk of damage to the pressure relief mechanism 22 due to external impact, enabling the pressure relief mechanism 22 to achieve normal pressure relief function. The second reinforcement portion 232 abuts against the protruding portion 2117. This further reduces the risk of deformation of the reinforcement member 23, and allows the second reinforcement portion 232 to transfer impact force to the protruding portion 2117, dispersing the impact force, so that the reinforcement member 23 is less prone to damage.

The reinforcement member 23 further includes a third reinforcement portion 233, where the third reinforcement portion 233 is connected to an end of the second reinforcement portion 232 away from the first reinforcement portion 231. The second reinforcement portion 232 is disposed around the third reinforcement portion 233. Along a thickness direction of the wall portion 211, the third reinforcement portion 233 is located on a side of the protruding portion 2117 facing the interior of the housing 21. The second reinforcement portion 232 is disposed around the third reinforcement portion 233, and the reinforcement member 23 is configured in a cap-like shape covering the pressure relief mechanism 22, so that the reinforcement member 23 has better integrity and higher strength. When the wall portion 211 is subjected to external impact, the reinforcement member 23 can absorb more energy from the external impact without being damaged, reducing a magnitude of the impact force transferred to the pressure relief mechanism 22, and reducing the risk of damage to the pressure relief mechanism 22 due to the external impact, enabling the pressure relief mechanism 22 to achieve normal pressure relief function.

The above description merely provides preferred embodiments of this application and is not intended to limit this application. For those skilled in the art, various modifications and variations can be made to this application. Any modifications, equivalent substitutions, improvements, and the like made within the spirit and principles of this application shall be included within the protection scope of this application.

## Claims

1. A battery cell, comprising:
a housing, having a wall portion, wherein the wall portion has an inner surface facing an interior of the housing, and the inner surface is provided with a groove;
a pressure relief mechanism, disposed on the wall portion; and
a reinforcement member, at least partially accommodated in the groove, wherein the reinforcement member is disposed around the pressure relief mechanism.

2. The battery cell according to claim 1, wherein a material strength of the reinforcement member is greater than a material strength of the wall portion.

3. The battery cell according to claim 1 or 2, wherein the reinforcement member comprises a first reinforcement portion and a second reinforcement portion, the first reinforcement portion is located in the groove, and the second reinforcement portion protrudes from an outer surface of the first reinforcement portion.

4. The battery cell according to claim 3, wherein along a thickness direction of the wall portion, the first reinforcement portion has a first surface facing the interior of the housing, and the second reinforcement portion protrudes from the first surface.

5. The battery cell according to claim 4, wherein the first surface is flush with the inner surface.

6. The battery cell according to claim 4 or 5, wherein the inner surface is provided with a protruding portion, the protruding portion is disposed around the pressure relief mechanism, the second reinforcement portion is formed with an accommodation space, and the protruding portion is at least partially accommodated in the accommodation space.

7. The battery cell according to claim 6, wherein the second reinforcement portion is an annular structure disposed around the protruding portion.

8. The battery cell according to claim 6 or 7, wherein the second reinforcement portion has a second surface facing the interior of the housing and furthest from the inner surface and the protruding portion does not protrude beyond the second surface in a direction from the first surface to the second surface.

9. The battery cell according to claim 8, wherein along the thickness direction of the wall portion, the protruding portion has an end surface facing the interior of the housing, and the end surface is closer to the first surface than to the second surface.

10. The battery cell according to claim 9, wherein along the thickness direction of the wall portion, a distance between the second surface and the end surface is A, satisfying: 0 ≤ A ≤ 3 mm.

11. The battery cell according to any one of claims 6 to 10, wherein the reinforcement member further comprises a third reinforcement portion, the third reinforcement portion is connected to an end of the second reinforcement portion away from the first reinforcement portion, the second reinforcement portion is disposed around the third reinforcement portion, and along the thickness direction of the wall portion, the third reinforcement portion is located on a side of the protruding portion facing the interior of the housing.

12. The battery cell according to claim 11, wherein the third reinforcement portion is provided with an exhaust hole for gas passage.

13. The battery cell according to claim 12, wherein the pressure relief mechanism is provided with a weak portion, wherein the weak portion is configured to rupture to release internal pressure of the battery cell during pressure relief of the battery cell; and
a projection of the weak portion in the thickness direction of the wall portion does not overlap with the exhaust hole.

14. The battery cell according to claim 13, wherein the pressure relief mechanism is provided with a score groove, and the pressure relief mechanism is provided with the weak portion in a region wherein the score groove is provided.

15. The battery cell according to claim 12, wherein the pressure relief mechanism is provided with a score groove and a pressure relief zone, wherein the score groove is located at an edge of the pressure relief zone, the pressure relief zone is configured to open along the score groove to release internal pressure of the battery cell during pressure relief of the battery cell; and
along the thickness direction of the wall portion, a projection area of the exhaust hole is S₁, and a projection area of the pressure relief zone is S₂, satisfying: 0.5 ≤ S₁/S₂ ≤ 1.2.

16. The battery cell according to any one of claims 3 to 15, wherein the first reinforcement portion is an annular structure disposed around the pressure relief mechanism.

17. The battery cell according to any one of claims 1 to 16, wherein the inner surface is provided with the protruding portion, the protruding portion is disposed around the pressure relief mechanism, the reinforcement member has an accommodation space, and the protruding portion is at least partially accommodated in the accommodation space.

18. The battery cell according to any one of claims 1 to 17, wherein the battery cell comprises a limiting member, wherein the limiting member is disposed on a side of the wall portion facing the interior of the housing, and along the thickness direction of the wall portion, the limiting member at least partially overlaps with a projection of the reinforcement member to limit at least a portion of the reinforcement member within the groove.

19. The battery cell according to claim 18, wherein the battery cell further comprises an electrode assembly, the electrode assembly is accommodated in the housing, the limiting member is made of an insulating material, and the limiting member is configured to insulate and isolate the wall portion from the electrode assembly.

20. The battery cell according to any one of claims 1 to 19, wherein the reinforcement member is bonded or welded to the wall portion.

21. The battery cell according to any one of claims 1 to 20, wherein a hardness of the reinforcement member is E₁, and a hardness of the wall portion is E₂, satisfying: 2 ≤ E₁/E₂ ≤ 10.

22. The battery cell according to any one of claims 1 to 21, wherein the wall portion is provided with a pressure relief hole, the pressure relief mechanism and the wall portion are separately provided and connected to each other, and the pressure relief mechanism covers the pressure relief hole.

23. The battery cell according to any one of claims 1 to 21, wherein the pressure relief mechanism is integrally formed with the wall portion.

24. The battery cell according to any one of claims 1 to 23, wherein the housing comprises:
a housing body, having an opening; and
an end cap, closing the opening; wherein
the end cap is the wall portion.

25. The battery cell according to any one of claims 1 to 23, wherein the housing comprises:
a housing body, comprising a side wall and the wall portion that are integrally formed, wherein the side wall is disposed around the wall portion, and along the thickness direction of the wall portion, one end of the side wall is connected to the wall portion, and another end forms an enclosing opening; and
an end cap, closing the opening.

26. A battery, comprising the battery cell according to any one of claims 1 to 25.

27. An electric device, comprising the battery cell according to any one of claims 1 to 25, wherein the battery cell is configured to provide electric energy.
